# EUROPÄISCHE PATENTSCHRIFT

(11) **EP 3 193 082 B1**
(45) Veröffentlichungstag und Bekanntmachung des Hinweises auf die Patenterteilung: **29.08.2018**
(21) Anmeldenummer: 16150949.2
(22) Anmeldetag: 12.01.2016
(51) Int. Cl.: F22B 21/34, F23M 5/08, F22B 37/10, F22G 1/02, F22G 1/06, F22G 3/00, F22G 7/14

(54) **VERFAHREN UND VORRICHTUNG ZUR ERZEUGUNG VON ÜBERHITZTEM DAMPF MITTELS DER IM KESSEL EINER VERBRENNUNGSANLAGE ERZEUGTEN WÄRME**
METHOD AND DEVICE FOR PRODUCING SUPERHEATED STEAM USING THE HEAT GENERATED IN THE BOILER OF A COMBUSTION PLANT
PROCEDE ET DISPOSITIF DE PRODUCTION DE VAPEUR SURCHAUFFEE AU MOYEN DE CHALEUR PRODUITE DANS LA CHAUDIERE D'UNE INSTALLATION DE COMBUSTION

(43) Veröffentlichungstag der Anmeldung: 19.07.2017
(73) Patentinhaber: Hitachi Zosen Inova AG, 8005 Zürich (CH)
(72) Erfinder: BÜHLER, Niculin, 5436 Würenlos (CH); KOLLER, Felix, 5107 Schinznach Dorf (CH); SZEPESHAZY, Istvan, 6340 Baar (CH)
(74) Vertreter: Schaad, Balass, Menzl & Partner AG

(56) Entgegenhaltungen:
- EP-A2- 2 011 972
- DE-A1- 10 257 305
- US-B1- 6 269 754

## Beschreibung

Die vorliegende Erfindung betrifft ein Verfahren zur Erzeugung von überhitztem Dampf mittels der im Kessel einer Verbrennungsanlage erzeugten Wärme gemäss dem Oberbegriff des Anspruchs 1. Die Erfindung betrifft weiter eine Vorrichtung zur Erzeugung von überhitztem Dampf mittels der im Kessel einer Verbrennungsanlage erzeugten Wärme gemäss dem Oberbegriff des Anspruchs 13 sowie eine Verbrennungsanlage umfassend eine solche Vorrichtung.

Verbrennungsanlagen sind dem Fachmann bekannt und können etwa zur Verbrennung von Müll eingesetzt werden. Solche Verbrennungsanlagen weisen in der Regel einen Kessel auf, welcher einen Feuerungsraum zur Verbrennung des zu verbrennenden Materials und in Strömungsrichtung des Rauchgases daran anschliessende Kesselzüge umfasst.

In den Kesselzügen sind mindestens abschnittsweise Wärmetauscher angeordnet, welche darauf ausgelegt sind, einerseits einen möglichst hohen Anteil der bei der Verbrennung freiwerdenden Wärmeenergie nutzbringend zurückzugewinnen und andererseits die mit dem heissen Rauchgas beaufschlagten Bauteile der Verbrennungsanlage sowie das Rauchgas selbst zu kühlen.

Üblicherweise wird in diesen Wärmetauschern Wasser im flüssigen oder gasförmigen Zustand als Wärmetauscherfluid verwendet. Der bei der Verwendung von Wasser erzeugte Dampf kann etwa zur Erzeugung von elektrischem Strom genutzt werden.

Die Dampferzeugung zur Stromproduktion erfolgt dabei grundsätzlich in drei Stufen. In einer ersten Stufe wird das Wasser im flüssigen Zustand bis maximal auf die Verdampfungstemperatur erwärmt. In einer zweiten Stufe wird das Wasser verdampft, wird also vom flüssigen in den gasförmigen Zustand gebracht, ohne dass die Temperatur dabei zunimmt. In einer dritten Stufe wird der Dampf dann überhitzt, also weiter auf eine oberhalb der Verdampfungstemperatur liegende Temperatur erwärmt, bevor dieser letztendlich einer Dampfturbine zur Stromproduktion zugeführt wird.

Entsprechend diesen drei Stufen Vorwärmung, Verdampfung und Überhitzung weisen Verbrennungsanlagen unterschiedliche Wärmetauscher auf. Während die für die Verdampfung ausgelegten Verdampfer oft in Form von Membranwänden ausgebildet sind, also als über Stege fest miteinander verbundene Rohre, liegen die für die Vorwärmung bzw. Überhitzung ausgelegten Vorwärmer und Überhitzer in der Regel in Form von Rohrbündeln bzw. Rohrschlangen bei liegenden Wärmetauschern und als über Sammler verbundene Rohrreihen (oder "Harfen") bei hängenden Wärmetauschern vor.

Während die Energie vom Rauchgas im hohen Temperaturbereich oberhalb von 500°C im Wesentlichen durch Strahlung auf das Wärmetauscherfluid übertragen wird, erfolgt dies bei tieferen Temperaturen im Wesentlichen durch Konvektion. Entsprechend werden die Kesselzüge in einen Strahlungsteil (oder "Strahlungszüge") und einen Konvektionsteil (oder "Konvektionszüge") unterteilt.

Gerade bei den in der Regel im Konvektionsteil angeordneten Überhitzern ist allerdings darauf zu achten, dass diese nicht zu hohen Wand- bzw. Materialtemperaturen ausgesetzt sind. So können insbesondere bei einer Rauchgastemperatur deutlich über 600°C Korrosionsprobleme auftreten. Diese ergeben sich daraus, dass bei derart hohen Rauchgastemperaturen noch gasförmig vorliegende korrosionsinduzierende Rauchgasbestandteile auf den kühleren Rohrwänden respektive den Belägen auf den Rohrwänden kondensieren und dort für Korrosionsprozesse zur Verfügung stehen. Aufgrund dieser Beschränkung hinsichtlich der Anwendungstemperatur werden Überhitzer üblicherweise einerseits bei Rauchgastemperaturen tiefer als 650°C betrieben und andererseits Überhitzungstemperaturen tiefer als ca. 430°C angestrebt.

Nichtsdestotrotz wurden Konzepte vorgeschlagen, welche Korrosionsprobleme auch bei höheren Überhitzungstemperaturen verhindern sollen:
Dem allgemeinen Problem, die Korrosion an Wärmetauscherrohren in einer Dampfkesselanlage zu minimieren, wird etwa gemäss DE-A-102010032612 dadurch begegnet, dass die Wärmetauscherrohre mit Keramik umgeben werden.

Weiter wird in JP 2000297613 ein Verfahren beschrieben, bei dem ein Sekundärmedium mittels eines im Rauchgasstrom befindlichen Wärmetauschers erhitzt wird und das Sekundärmedium als Wärmequelle für die Überhitzung von Wasserdampf verwendet wird. Da das Sekundärmedium einen sehr viel geringeren Druck als der zu erzeugende Dampf aufweist, können im Wärmetauscher Rohre aus üblichen Kesselstählen oder aus Keramik verwendet werden. Um eine befriedigende Überhitzung zu erhalten, sind die gemäss der Technologie der JP 2000297613 erforderlichen Wärmetauscherflächen allerdings sehr gross und somit kostenintensiv.

Zudem wird in EP-A-2423584 ein Dampferzeuger vorgeschlagen, der einen Wandüberhitzer enthält, welcher mehrere von Heissdampf durchströmte Rohrleitungen umfasst, die vor dem beim Verbrennungsprozess entstehenden Rauchgas durch plattenförmige Elemente aus einem korrosionsbeständigen Werkstoff geschützt sind.

Weiter befasst sich EP-A-2011972 mit dem Problem, den Heizwert der Brennstoffe auf höherem exergetischen Niveau zu nutzen und somit eine Erhöhung des elektrischen Wirkungsgrads zu ermöglichen, ohne dass der Kessel durch Korrosion gefährdet würde. Hierfür wird vorgeschlagen, in die aus Feuerfestmaterial aufgemauerten Wände einer Brennkammer kanalförmige Hohlräume zur Durchführung eines gasförmigen Wärmeträgermediums einzulassen, welches danach zum Überhitzer geleitet wird und dort zur Überhitzung des Dampfes verwendet wird.

Zudem wird auf EP-A-0981015 verwiesen, welche sich mit der Aufgabe befasst, einen Dampferzeuger für überhitzten Dampf für Verbrennungsanlage mit korrosiven Rauchgasen zu schaffen, bei welchem eine hohe Überhitzertemperatur ohne Korrosion am Endüberhitzer erreicht werden kann. Hierzu wird in EP-A-0981015 vorgeschlagen, an einer Wand des Strahlungsteils Platten anzuordnen, wobei zwischen den Platten und der Wand ein Raum vorgesehen ist, in welchem mindestens ein Teil eines Überhitzers als Wandüberhitzer angeordnet ist und welcher eine nicht-korrosive gasförmige Atmosphäre enthält. Dabei durchströmt die gasförmige Atmosphäre den Raum in möglichst geringer Menge.

Ein Verfahren zum Schutz von frei im Feuerungsraum verlaufenden, an der Decke des Feuerungsraums aufgehängten Wärmetauscherrohren wird ferner in DE-A-102013000424 offenbart; auch gemäss diesem Verfahren wird zwischen dem Wärmetauscherrohr und dem das Wärmetauscherrohr umgebenden Keramikelement ein Gas zugeführt.
Nachteilig an der in EP-A-0981015 beschriebenen Technologie ist, dass die sich ergebende exergetische Bilanz suboptimal ist:
Obschon gemäss EP-A-0981015 die durch den korrosionsfreien Raum fliessende Luftmenge möglichst klein gehalten werden soll, strömt in der Praxis immer ein Teil der erwärmten Luft über Spalten, Risse oder Poren in die Brennkammer. In Anbetracht der grossen erforderlichen Fläche und des relativ hohen Überdrucks, welcher im korrosionsfreien Raum aufrechterhalten werden muss, ist die Menge an erwärmter Luft, welche in den Brennraum entweichen kann, somit relativ hoch. Die in der erwärmten Luft enthaltene Wärmeenergie wird somit ungenutzt in die Brennkammer geführt, wodurch der Rauchgasvolumenstrom und damit die Rauchgasverluste des Kessels erhöht werden, was aus energetischer Sicht ungünstig ist.
Im Übrigen weist die Technologie gemäss EP-A-0981015 den Nachteil auf, dass die Endüberhitzung respektive die endüberhitzte Dampfmenge in keiner Weise geregelt werden kann.

Die im US-6269754-B1 offenbarte Erfindung betrifft einen Dampferzeuger für überhitzten Dampf für Verbrennungsanlagen mit korrosiven Rauchgasen, im wesentlichen bestehend aus einem Strahlungsteil und einem Konvektionsteil, mit mindestens einem Überhitzer und mit an mindestens einer Wand des Strahlungsteiles innen angeordneten Platten, wobei zwischen den Platten und der Wand des Strahlungsteiles ein Raum vorgesehen ist und mindestens ein Teil des Überhitzers als Wandüberhitzer in dem Raum im Strahlungsteil angeordnet ist. Der Dampferzeuger ist dadurch gekennzeichnet, dass der Raum eine nicht korrosive gasförmige Atmosphäre enthält, welche einen höheren Druck als der Druck der Gase in der Brennkammer aufweist. Auf diese Weise kann eine hohe Überhitzertemperatur ohne Korrosion am Endüberhitzer erreicht werden, so dass der Überhitzer aus preiswerten Material gefertigt sein kann. Aufgabe der vorliegenden Erfindung ist es somit, ein Verfahren zur Erzeugung von überhitztem Dampf mittels der im Kessel einer Verbrennungsanlage erzeugten Wärme zur Verfügung zu stellen, welches eine hohe Überhitzertemperatur und damit eine hohe Dampftemperatur ohne Korrosion am Überhitzer gewährleistet und welches gleichzeitig eine optimale energetische Nutzung der zur Verfügung stehenden Wärmeenergie ermöglicht. Zudem soll eine einfache und exakte Regelung der Leistung der Anlage gewährleistet werden können.

Die Aufgabe wird erfindungsgemäss gelöst durch das Verfahren des Anspruchs 1, bevorzugte Ausführungsformen sind in den abhängigen Ansprüchen wiedergegeben.

Gemäss dem erfindungsgemässen Verfahren wird vorüberhitzter Dampf einem Endüberhitzer zugeführt, welcher in Form von mehreren Endüberhitzerrohren vorliegt, durch welche der vorüberhitzte Dampf geleitet und dabei endüberhitzt wird.

Die Endüberhitzerrohre sind dabei mindestens teilweise in mindestens einem Hohlraum angeordnet, der im Innern eines Wandelements des Kessels und/oder eines im Kessel angeordneten Schotts ausgebildet ist und kesselseitig mindestens teilweise durch eine Feuerfestmaterialschicht abgeschlossen ist und von dem bei der Verbrennung freigesetzten Rauchgas überströmt und mit darin enthaltener Wärmeenergie beaufschlagt wird.

Erfindungsgemäss wird der Hohlraum von einem Sekundärmedium durchströmt. Somit wird ein Fliessen des Sekundärmediums gezielt induziert, etwa mittels eines Gebläses, wie weiter unten ausgeführt wird.

Während des Durchströmens durch den Hohlraum wird das Sekundärmedium über Wärmeübertragung vom Rauchgas über die Feuerfestmaterialschicht erwärmt. Das derart erwärmte Sekundärmedium wird über eine Sekundärmediumzuführleitung einem Sekundärwärmetauscher zur weiteren Nutzung der im Sekundärmedium enthaltenen Wärme zugeführt.

Wie erwähnt ist der Hohlraum, in dem mindestens ein Teil der Endüberhitzerrohre angeordnet ist, im Innern eines Wandelements des Kessels und/oder eines im Kessel angeordneten Schotts ausgebildet. Der Begriff "Wandelement" schliesst dabei sowohl Elemente der Kesselmantelwand mit ein, d.h. derjenigen Wand, die das Innere des Kessels gegenüber aussen abschliesst, als auch Elemente einer Kesselzwischenwand, die zwischen einzelnen Kesselzügen zur Strömungsleitung des Rauchgases vorliegt.

Wie ebenfalls erwähnt wird der Hohlraum kesselseitig durch eine Feuerfestmaterialschicht abgeschlossen. Unter "kesselseitig" wird dabei die dem Innern des Kessels zugewandte und somit dem heissen Rauchgas direkt exponierte Seite verstanden. Während von den Seiten eines Wandelements in der Regel lediglich eine kesselseitig ist, sind im Falle eines Schotts, welches im Innern des Kessels angeordnet ist, beide Seiten kesselseitig, d.h. dem heissen Rauchgas direkt exponiert.

Das Sekundärmedium ist in der Regel korrosionsfrei, d.h. dass es im Wesentlichen frei von Stoffen ist, welche gegenüber den Endüberhitzerrohren bei Betriebsbedingungen korrosiv sind. Somit wird gewährleistet, dass im Hohlraum eine korrosionsfreie Atmosphäre vorliegt und die Endüberhitzerrohre selbst bei relativ hohen Überhitzungstemperaturen keiner oder lediglich einer sehr geringen Korrosion ausgesetzt sind. Gemäss einer besonders einfachen und daher bevorzugten Ausführungsform wird als Sekundärmedium Luft verwendet.

Im Unterschied zu dem in EP-A-0981015 offenbarten Überhitzer, in welchem die Luftmenge, die den korrosionsfreien Raum durchfliesst, möglichst klein gehalten werden soll, wird gemäss dem erfindungsgemässen Verfahren ein Fliessen des Sekundärmediums gezielt induziert. Im weiteren Unterschied zu EP-A-0981015 wird das während des Durchströmens erwärmte Sekundärmedium gezielt über eine Sekundärmediumzuführleitung in einen Sekundärwärmetauscher geleitet. Somit kann zum einen die im Sekundärmedium enthaltene Wärmeenergie auf einem optimalen Temperaturniveau genutzt werden, was aus exergetischer Sicht günstig ist. Zum anderen wird dadurch, dass die Endüberhitzerrohre permanent umströmt werden, eine Optimierung des Wärmeübergangs auf den in den Endüberhitzerrohren enthaltenen Dampf erhalten.

Dem Sekundärmedium kommt somit eine Dreifachfunktion zu: erstens fungiert es als Wärmeträgermedium, dessen aufgenommene Wärme mittels des Sekundärwärmetauschers weiter genutzt wird, zweitens kommt dem Sekundärmedium auch die Funktion einer nicht-korrosiven Schutzatmosphäre zum Schutz der Endüberhitzerrohre zu und drittens dient es dazu, den Wärmeübergang auf den in den Endüberhitzerrohren enthaltenen Dampf zu optimieren.

Die Nutzung der im Sekundärmedium enthaltenen Wärmeenergie kann auf vielerlei Arten erfolgen. Gemäss einer besonders bevorzugten Ausführungsform wird im Sekundärwärmetauscher Wärme vom Sekundärmedium auf den zu überhitzenden Dampf übertragen. Dabei ist besonders bevorzugt, dass die Übertragung auf den zu überhitzenden Dampf erfolgt, bevor dieser dem Endüberhitzer zugeführt wird. Dies erlaubt unterem anderen auch eine einfache und exakte Regelung der Endüberhitzung und im weiteren der Gesamtanlage. Denkbar ist weiter, dass alternativ oder zusätzlich dazu im Sekundärwärmetauscher Heisswasser erzeugt wird, welches als Fernwärme z.B. zum Heizen von Haushalten verwendet werden kann, oder dass Luft vorgewärmt wird, welche als Verbrennungsluft genutzt wird.

Für den Fall, dass im Sekundärwärmetauscher Wärme vom Sekundärmedium auf den zu überhitzenden Dampf übertragen wird, kann die Temperatur des zu überhitzenden Dampfs im Sekundärwärmetauscher in der Regel um bis ca. 50°C erhöht werden. Da der dem Endüberhitzer zugeführte Dampf somit höher erhitzt ist, als dies ohne Durchlaufen des Sekundärwärmetauschers der Fall wäre, kann insgesamt eine höhere Endüberhitzungstemperatur erreicht werden oder aber, bei Beibehaltung der Endüberhitzungstemperatur, eine Verminderung der Endüberhitzerfläche.

Gemäss einer weiteren bevorzugten Ausführungsform wird das Sekundärmedium nach der im Wärmetauscher erfolgten Übertragung der im Sekundärmedium enthaltenen Wärme mindestens teilweise in den im Inneren des Wandelements bzw. des Schotts ausgebildeten Hohlraum zurückgeführt. Dadurch verbleibt das in der Regel noch Restwärme enthaltende Sekundärmedium im Kreislauf, was weiter zu einer optimalen exergetischen Bilanz des erfindungsgemässen Verfahrens beiträgt.

In der Regel weist das Sekundärmedium einen gegenüber dem Druck im Innern des Kessels erhöhten Druck auf. Damit soll sichergestellt werden, dass durch die in der Praxis durch Montage und Betrieb kaum vermeidbaren Undichtigkeiten in der Feuerfestmaterialschicht korrosives Rauchgas in den Hohlraum eindringen kann.

Zur Erzeugung des vorüberhitzten Dampfs kommen vorzugsweise Überhitzer zum Einsatz, wie sie im Kessel vorbekannter Verbrennungsanlagen eingesetzt werden. Diese sind im Innern des Kessels angeordnet und sind in Regel in Form von direkt dem Rauchgas exponierten Überhitzerrohren ausgebildet. Die vorliegende Erfindung kann somit relativ einfach in bereits bestehende, mit Überhitzern ausgestattete Verbrennungsanlagen integriert werden, wobei diese Überhitzer zur Vorüberhitzung verwendet werden können.

Vorzugsweise wird das Wandelement und/oder das Schott, in dem mindestens ein Teil der Endüberhitzerrohre angeordnet ist, im Strahlungsteil des Kessels angeordnet.

Diesbezüglich ist weiter bevorzugt, dass das Wandelement und/oder das Schott in einem Teil des Kessels angeordnet ist, in der die Rauchgastemperatur 600°C bis 1'200°C beträgt. Mithin kann gewährleistet werden, dass eine sehr hohe Endüberhitzungstemperatur erhalten wird, ohne dass Korrosionsprobleme auftreten.

Letztendlich kann mittels des erfindungsgemässen Verfahrens erreicht werden, dass nach der Endüberhitzung überhitzter Dampf mit einer Temperatur im Bereich von 350°C bis 650°C, bevorzugt von 400°C bis 600°C, bevorzugter von 450°C bis 550°C, und einem Druck im Bereich von 40 bis 150 bar vorliegt, was eine optimale Energieauskopplung mittels Dampfturbine zur Stromproduktion ermöglicht.

Typischerweise weist der erste Strahlungszug des Kessels Eindüsungen auf, durch welche Sekundärluft und gegebenenfalls rezirkuliertes Abgas zur Sekundärverbrennung der nach der Primärverbrennung noch vorliegenden verbrennbaren Gase eingeführt wird. Diese Eindüsungen sind in der Regel in mindestens einer Eindüsebene angeordnet, welche vorzugsweise horizontal verläuft bzw. verlaufen. Besonders bevorzugt sind die Eindüsungen dabei auf mehrere Eindüsebenen verteilt.

Aus konstruktiver Sicht ist insbesondere bevorzugt, dass das Wandelement, in dem mindestens ein Teil der Endüberhitzerrohre angeordnet ist, im Strahlungsteil oberhalb der obersten Eindüsebene angeordnet ist. Somit sind für die Eindüsungen bereits bestehender Verbrennungsanlagen keine oder nur minime Anpassungen notwendig. Insbesondere besteht kein Erfordernis, die Eindüsungen durch die die Endüberhitzerrohre enthaltenden Wandelemente hindurchzuführen.

Durch die Anordnung des Wandelements oberhalb der obersten Eindüsebene unterscheidet sich die vorliegende Erfindung sehr deutlich von Anlagen, in welchen die aus Feuerfestmaterial gebildeten Wände bereits unterhalb der obersten Eindüsung beginnen. Insbesondere unterscheidet sich die vorliegende Erfindung von Anlagen, in welchen die aus Feuerfestmaterial gebildeten Wände bereits unmittelbar oberhalb des Verbrennungsrosts beginnen, was in den meisten der gängigen Anlagen der Fall ist. So werden bei der erwähnten bevorzugten Anordnung der vorliegenden Erfindung die Lasten des Wandelements von der Grundkonstruktion der Kesselwand aufgenommen, insbesondere von der im Strahlungsteil in der Kesselwand üblicherweise vorhandenen Membranverdampferwand, oder - bei der Ausführung als Schott - direkt in den üblicherweise verwendeten Kesselstahlbau eingeleitet.

Gemäss einer weiteren bevorzugten Ausführungsform ist im Wandelement und/oder im Schott, in deren Hohlraum die Endüberhitzerrohre angeordnet sind, zudem eine einen Verdampfer bildende Membranverdampferwand eingelassen. Dabei ist besonders bevorzugt, dass auf die Membranverdampferwand eine Isolationsschicht aufgebracht ist.

Die auf die Membranverdampferwand aufgebrachte Isolationsschicht, insbesondere deren Dicke, wird vorzugsweise derart gewählt, dass die auf die Membranverdampferwand übertragene Wärmeenergiemenge innerhalb gewisser Grenzen gehalten wird, damit für die erwünschte Überhitzung Wärmeenergiemenge in ausreichender Menge zur Verfügung steht.

Konkret wird somit der Hohlraum vorzugsweise zwischen einer auf die Membranverdampferwand aufgebrachten Isolationsschicht des Wandelements und/oder Schotts und der im Abstand von der Isolationsschicht angeordneten Feuerfestmaterialschicht ausgebildet, wie etwa im Zusammenhang mit den Figuren weiter unten zusätzlich ausgeführt wird.

Gemäss einem weiteren Aspekt betrifft die vorliegende Erfindung nebst dem oben geschilderten Verfahren zudem eine Vorrichtung zur Erzeugung von überhitztem Dampf mittels der im Kessel einer Verbrennungsanlage erzeugten Wärme.

Dies umfasst in Analogie zur obigen Beschreibung des erfindungsgemässen Verfahrens einen Endüberhitzer zur Endüberhitzung von vorüberhitztem Dampf, wobei der Endüberhitzer in Form von mehreren Endüberhitzerrohren vorliegt, welche mindestens teilweise in einem Hohlraum angeordnet sind, der im Innern eines Wandelements und/oder eines Schotts ausgebildet ist und mindestens auf einer Seite mindestens teilweise durch eine Feuerfestmaterialschicht abgeschlossen ist. Im Betrieb der Vorrichtung wird die kesselseitig angeordnete Feuerfestmaterialschicht von den Rauchgasen überströmt und mit der darin enthaltenen Wärmeenergie beaufschlagt, wie im Zusammenhang mit dem erfindungsgemässen Verfahren beschrieben.

Die Vorrichtung umfasst in weiterer Analogie zum oben beschriebenen Verfahren zusätzlich einen Sekundärwärmetauscher, welcher mit dem Hohlraum über eine Sekundärmediumzuführleitung strömungsverbunden ist.

Wie dargelegt, kann mittels des Sekundärwärmetauschers die im Sekundärmedium enthaltene Wärmeenergie nutzbar gemacht werden, was zu einer optimalen energetischen Bilanz der Vorrichtung beiträgt.

Insbesondere ist der Sekundärwärmetauscher vorzugsweise derart ausgestaltet, um Wärme vom Sekundärmedium auf den zu überhitzenden Dampf zu übertragen. Besonders bevorzugt ist dabei die Ausgestaltung derart, um Wärme vom Sekundärmedium auf den zu überhitzenden Dampf zu übertragen, bevor dieser dem Endüberhitzer zugeführt wird. Somit weist der Sekundärwärmetauscher vorzugweise eine erste Wärmetauscherleitung zum Leiten des Sekundärmediums und eine über eine wärmedurchlässige Wand davon getrennte zweite Wärmetauscherleitung zum Leiten des vorüberhitzten Dampfs auf.

Weiter ist der Sekundärwärmetauscher vorzugsweise derart ausgestaltet, das Sekundärmedium nach der im Wärmetauscher erfolgten Übertragung der im Sekundärmedium enthaltenen Wärme mindestens teilweise in den Hohlraum zurückzuführen. Somit weist die Vorrichtung vorzugsweise eine vom Sekundärwärmetauscher zum Hohlraum führende und damit strömungsverbundene Sekundärmediumrückführleitung auf.

Alle weiteren im Zusammenhang mit dem erfindungsgemässen Verfahren als bevorzugt beschriebenen Merkmale sind auch bevorzugte Merkmale der erfindungsgemässen Vorrichtung und *vice versa.*

Desweiteren betrifft die vorliegende Erfindung nebst dem beschriebenen Verfahren und der beschriebenen Vorrichtung auch eine Verbrennungsanlage umfassend eine solche Vorrichtung.

Dabei sind die im Zusammenhang mit dem erfindungsgemässen Verfahren und der erfindungsgemässen Vorrichtung als bevorzugt beschriebenen Merkmale auch bevorzugte Merkmale der Verbrennungsanlage.

Die Erfindung wird anhand der beiliegenden Figuren weiter illustriert. Es zeigt:
- Fig. 1: eine schematische Darstellung eines Teils einer erfindungsgemässen Verbrennungsanlage in der die Lage des Endüberhitzers angezeigt ist;
- Fig. 2: eine schematische Darstellung eines Teils einer erfindungsgemässen Verbrennungsanlage im Längsschnitt, in der der Leitungsverlauf des zu überhitztenden Dampfs sowie des Sekundärmediums angegeben sind;
- Fig. 3: eine schematische Darstellung einer erfindungsgemässen Vorrichtung umfassend einen Endüberhitzer, in welchem die Endüberhitzerrohre in einem Hohlraum angeordnet sind, der in einer im Schnitt wiedergegebenen Wand ausgebildet ist, sowie einen mit dem Endüberhitzer strömungsverbundenen Sekundärwärmetauscher; und
- Fig. 4: eine schematische Darstellung eines Schotts zur Verwendung in einer erfindungsgemässen Vorrichtung im Querschnitt.

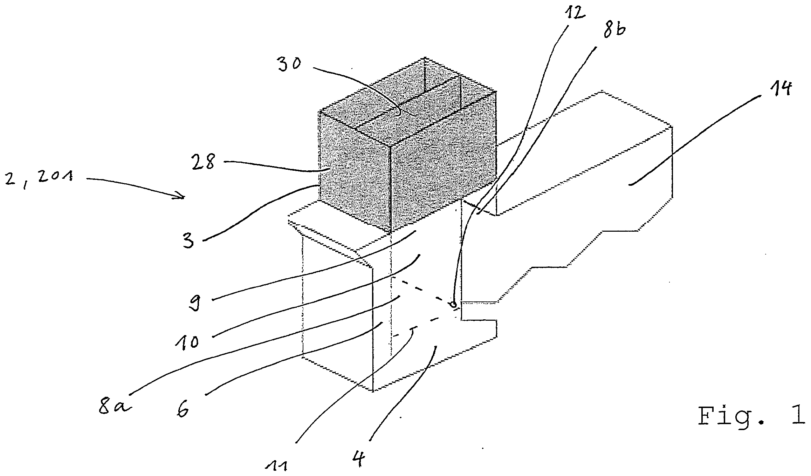

Die in Fig. 1 gezeigte Verbrennungsanlage 2, welche in Form einer Müllverbrennungsanlage 201 vorliegt, umfasst einen Kessel 3, in dem ein Feuerungsraum 4 ausbildet ist, in dem der über einen Aufgabeschacht 6 eingeführte Müll unter Zuführung von Primärluft verbrannt wird, wobei Rauchgas entsteht, das je nach eingesetztem Brennstoff mehr oder weniger korrosiv ist.

In Richtung des Rauchgases stromabwärts sind zwei aufeinanderfolgende vertikale Kesselzüge 8a, 8b angeordnet. Dabei ist im ersten vertikalen Kesselzug eine Nachverbrennungszone 10 ausgebildet, welcher Eindüsungen zur Zuführung von Sekundärluft und gegebenenfalls rezirkuliertem Abgas zugeordnet sind. Diese Eindüsungen sind auf eine Mehrzahl von Eindüsebenen verteilt. Von den in der Eindüsebene 11 angeordneten Eindüsungen ist in Fig. 1 nur eine Eindüsung 12 gezeigt.

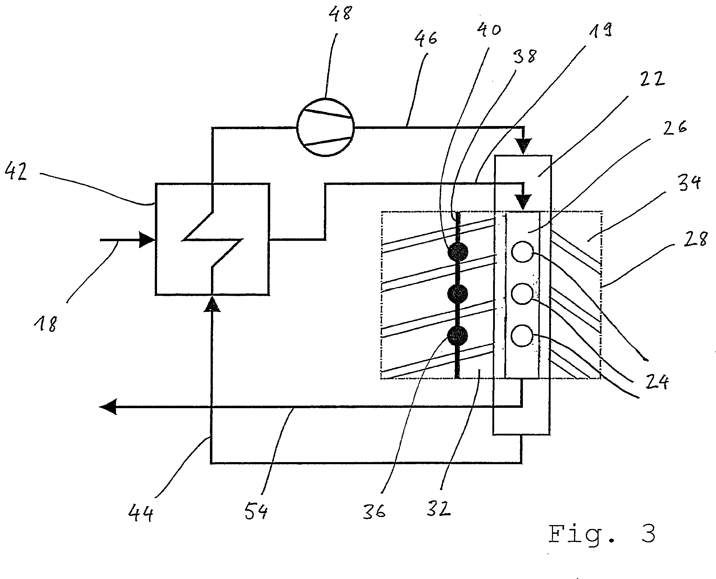

Die vertikalen Kesselzüge 8a,b weisen Membranverdampferwände auf, welche mit der bei der Verbrennung freiwerdenden Wärmeenergie beaufschlagt werden. (Entsprechende Membranverdampferwände werden weiter unten im Zusammenhang mit Fig. 3 beschrieben.) Da in diesen Kesselzügen die Übertragung von Energie aus dem Rauchgas mittels Flamm- und Gasstrahlung an die Wärmetauscher - konkret die Membranverdampferwände - erfolgt, bilden diese Kesselzüge den Strahlungsteil 9 (bzw. die Strahlungszüge) des Kessels 3 und werden - da keine gasumströmten weiteren Wärmetauscher enthalten sind - auch als Leerzüge bezeichnet.

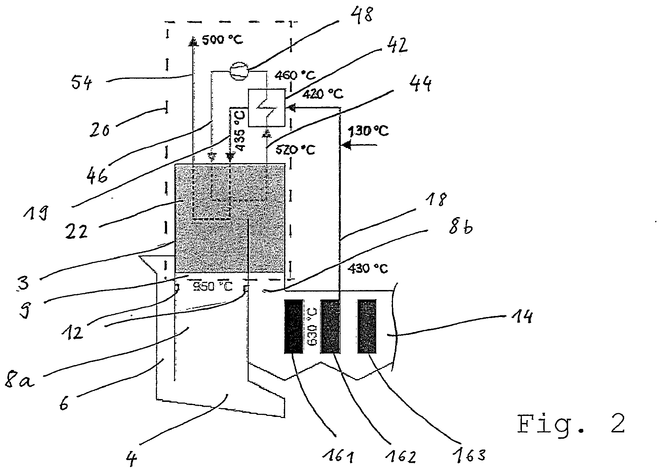

An den zweiten der beiden Strahlungszüge, d.h. Strahlungszug 8b, schliesst ein horizontaler Kesselzug 14 an, in dem - wie etwa aus Fig. 2 ersichtlich - eine Vielzahl von Wärmetauschern 16 vorliegen, an denen die Energie im Wesentlichen mittels Konvektion auf das darin befindliche Wärmetauscherfluid, im konkreten Fall auf Wasser bzw. Wasserdampf, übertragen wird. Dieser Kesselzug 14 wird somit auch als Konvektionszug bezeichnet.

Wie aus Fig. 2 ersichtlich ist, liegen im Konvektionszug Überhitzer 161, 162, 163 vor, in denen Wasserdampf aus der Kesseltrommel vorüberhitzt wird. Im weiteren kann im Konvektionszug mindestens ein Schutzverdampfer sowie mindestens ein Economizer oder Vorwärmer vorliegen.

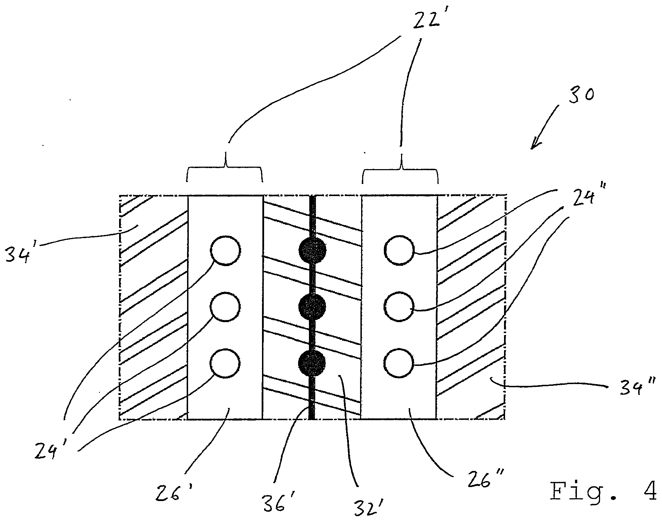

Von den Überhitzern wird der vorüberhitzte Dampf über eine primäre Dampfleitung 18 einer Vorrichtung 20 zugeführt, welche einen Endüberhitzer 22 umfasst, wie er etwa in Fig. 3 oder 4 dargestellt ist, und einen Sekundärwärmetauscher 42.

Der in Fig. 3 gezeigte Endüberhitzer 22 ist dabei in Form von mehreren Endüberhitzerrohren 24 ausgebildet, welche in einem Hohlraum 26 angeordnet sind, der im Innern eines Wandelements 28 des Kessels 3 ausbildet ist, welches - wie in Fig. 1 gezeigt - oberhalb der obersten Eindüsebene 11 im obersten Bereich des ersten und zweiten Kesselzuges angeordnet ist. Konkret ist gemäss der in Fig. 3 gezeigten Ausführung der Hohlraum 26 zwischen einer Isolationsschicht 32 des Wandelements und einer davon beabstandeten Feuerfestmaterialschicht 34 ausgebildet, welche den Hohlraum 26 kesselseitig abschliesst. Die Isolationsschicht 32 ist auf die bereits vorher beschriebene Membranverdampferwand 36 aufgebracht, welche aus über Stege 38 miteinander verbundenen Verdampferrohren 40 gebildet wird.

Der Hohlraum 26 wird von einem Sekundärmedium durchströmt, im konkreten Fall von Luft, und ist über eine Sekundärmediumzuführleitung 44 mit einem Sekundärwärmetauscher 42 strömungsverbunden.

Der Sekundärwärmetauscher 42 ist gemäss Fig. 2 derart ausgestaltet, Wärme vom Sekundärmedium auf den über die primäre Dampfleitung 18 zugeführten, weiter zu überhitzenden Dampf zu übertragen, bevor dieser über eine sekundäre Dampfleitung 19 dem Endüberhitzer 22 zugeführt wird. Konkret weist der Sekundärwärmetauscher 42 für die Wärmeübertragung eine erste Wärmetauscherleitung auf, durch die das Sekundärmedium geleitet wird, und eine über eine wärmedurchlässige Wand davon getrennte zweite Wärmetauscherleitung, durch die der vorüberhitzte Dampfs geleitet wird.

Um die Luft nach der im Sekundärwärmetauscher erfolgten Wärmeübertragung wieder in den Hohlraum 26 zurückzuführen, liegt eine vom Sekundärwärmetauscher 42 zum Hohlraum führende und damit strömungsverbundene Sekundärmediumrückführleitung 46 vor, welcher ein Gebläse 48 zugeordnet ist.

Im Unterschied zu der in Fig. 3 gezeigten Ausführungsform ist gemäss dem in Fig. 4 gezeigten Endüberhitzer 22' der Hohlraum 26' bzw. 26", in dem die Endüberhitzerrohre 24' bzw. 24" angeordnet sind, im Inneren eines im Kessel angeordneten Schotts 30 ausgebildet. Dieses wird im Gegensatz zu dem in Fig. 3 gezeigten Wandelement beidseitig von Rauchgas umströmt. Entsprechend wird in dem in Fig. 4 gezeigten Schott 30 die Isolationsschicht 32', die auf die Membranverdampferwand 36' aufgebracht ist, beidseitig von einer davon beabstandeten Feuerfestmaterialschicht umschlossen, wobei auf einer der beiden Seiten eine erste Feuerfestmaterialschicht 34' einen ersten Hohlraum 26' und auf der anderen Seite eine zweite Feuerfestmaterialschicht 34" einen zweiten Hohlraum 26" abschliesst. Die Feuerfestmaterialschichten 34', 34" können etwa aus Feuerfestkacheln gefügt sein.

Gemäss der in Fig. 1 gezeigten Verbrennungsanlage können sowohl Wandelemente, welche in der konkret gezeigten Ausführungsform sich auf allen Seiten des Kessels ab einer unteren Grenze bis zur Kesseldecke hin erstrecken, als auch mindestens ein Schott gleichzeitig vorgesehen sein.

Gemäss dem in Fig. 2 konkret gezeigten, rein beispielhaften Schema liegt im Betrieb am Eintritt des Konvektionszug eine Rauchgastemperatur von 630°C vor, wodurch mittels der darin angeordneten Überhitzer eine Vorüberhitzung auf 430°C stattfindet. Der vorüberhitzte Dampf wird nach einer Temperaturregulierung mittels eines Einspritzkühlers mit einer Temperatur von ca. 420°C dem Sekundärwärmetauscher 42 zugeführt.

In den Strahlungszügen wird die in den Fig. 3 bzw. 4 gezeigte Feuerfestmaterialschicht 34 bzw. 34', 34" von bei der Verbrennung freiwerdender Wärmeenergie beaufschlagt, wobei im konkret gezeigten Beispiel die Rauchgastemperatur im ersten Strahlungszug am Eintritt in den Bereich des Endüberhitzers 22 950°C beträgt.

Durch Wärmeübergang über die Feuerfestmaterialschicht wird einerseits der durch die Endüberhitzerrohre 24 bzw. 24', 24" geleitete vorüberhitzte Dampf im konkret gezeigten Beispiel auf eine Temperatur von 500°C endüberhitzt. Andererseits wird auch die den Hohlraum 26 bzw. 26', 26" durchströmende und als Korrosionsschutz für die Endüberhitzerrohre fungierende Luft über Wärmeübergang erwärmt.

Die derart erwärmte Luft wird dann im konkret gezeigten Beispiel mit einer Temperatur von ca. 520°C über die Sekundärmediumzuführleitung 44 dem Sekundärwärmetauscher 42 zugeführt, wo Wärme auf den vorüberhitzten Dampf übertragen wird, sodass der vorüberhitzte Dampf weiter auf ca. 435°C erhitzt wird, bevor er dem Endüberhitzer 22 zugeführt wird. Die Luft wird danach gemäss dem gezeigten Beispiel mit einer Temperatur von ca. 460°C mittels des Gebläses 48 über die Sekundärmediumrückführleitung 46 wieder in den Hohlraum 26 bzw. 26', 26" zurückgeführt, wodurch der Sekundärmediumkreislauf geschlossen wird.

Durch die zusätzliche Erhitzung des vorüberhitzten Dampfs mittels des Sekundärmediums im Sekundärwärmetauscher kann insgesamt eine höhere Endüberhitzungstemperatur erreicht werden oder aber, bei Beibehaltung der Endüberhitzungstemperatur, eine Verminderung der Endüberhitzerfläche.

Der endüberhitzte Dampf wird schliesslich über eine Ausgangsleitung 54 einer Dampfturbine zur Stromerzeugung zugeführt.

### Referenzzeichenliste

- 2; 201: Verbrennungsanlage; Müllverbrennungsanlage
- 3: Kessel
- 4: Feuerungsraum
- 6: Aufgabeschacht
- 8a,b: vertikale Kesselzüge
- 9: Strahlungsteil
- 10: Nachverbrennungszone
- 11: Eindüsebene
- 12: Eindüsung
- 14: horizontaler Kesselzug
- 16: Wärmetauscher (Konvektion)
- 161-163: Überhitzer
- 18: primäre Dampfleitung
- 20: Vorrichtung
- 22, 22': Endüberhitzer
- 24, 24', 24": Endüberhitzerrohre
- 26, 26', 26": Hohlraum
- 28: Wandelement
- 30: Schott
- 32, 32': Isolationsschicht
- 34, 34', 34": Feuerfestmaterialschicht
- 36, 36': Membranverdampferwand
- 38: Stege
- 40: Verdampferrohre
- 42: Sekundärwärmetauscher
- 44: Sekundärmediumzuführleitung
- 46: Sekundärmediumrückführleitung
- 48: Gebläse
- 54: Ausgangsleitung

## Patentansprüche

1. Verfahren zur Erzeugung von überhitztem Dampf mittels der im Kessel (3) einer Verbrennungsanlage (2; 201) erzeugten Wärme, wobei vorüberhitzter Dampf einem Endüberhitzer (22) zugeführt wird, welcher in Form von mehreren Endüberhitzerrohren (24) vorliegt, durch welche der vorüberhitzte Dampf geleitet und dabei endüberhitzt wird, und die Endüberhitzerrohre (24, 24', 24") mindestens teilweise in mindestens einem Hohlraum (26, 26', 26") angeordnet sind, der im Innern eines Wandelements (28) des Kessels (3) und/oder eines im Kessel (3) angeordneten Schotts (30) ausgebildet und kesselseitig mindestens teilweise durch eine Feuerfestmaterialschicht (34) abgeschlossen und von dem bei der Verbrennung freigesetzten Rauchgas überströmt wird,
**dadurch gekennzeichnet, dass** der Hohlraum (26) von einem Sekundärmedium durchströmt wird, welches dabei über Wärmeübertragung vom Rauchgas über die Feuerfestmaterialschicht (34) erwärmt wird, und das derart erwärmte Sekundärmedium über eine Sekundärmediumzuführleitung (44) einem Sekundärwärmetauscher (42) zugeführt wird.

2. Verfahren gemäss Anspruch 1, **dadurch gekennzeichnet, dass** im Sekundärwärmetauscher (42) Wärme vom Sekundärmedium auf den zu überhitzenden Dampf übertragen wird, vorzugsweise bevor dieser dem Endüberhitzer (22) zugeführt wird.

3. Verfahren gemäss Anspruch 2, **dadurch gekennzeichnet, dass** durch die Wärmeübertragung im Sekundärwärmetauscher (42) die Temperatur des zu überhitzenden Dampfs um bis 50°C erhöht wird.

4. Verfahren gemäss einem der vorhergehenden Ansprüche, **dadurch gekennzeichnet, dass** der vorüberhitzte Dampf mittels mindestens eines Überhitzers (161, 162, 163) erzeugt wird, der im Innern des Kessels (3) der Verbrennungsanlage, insbesondere eines Konvektionszugs (14) des Kessels, angeordnet ist.

5. Verfahren gemäss einem der vorhergehenden Ansprüche, **dadurch gekennzeichnet, dass** das Sekundärmedium im Wesentlichen frei von Stoffen ist, welche gegenüber den Endüberhitzerrohren (24) korrosiv sind, und bevorzugt Luft ist.

6. Verfahren gemäss einem der vorhergehenden Ansprüche, **dadurch gekennzeichnet, dass** das Sekundärmedium nach der im Sekundärwärmetauscher (42) erfolgten Übertragung der im Sekundärmedium enthaltenen Wärme mindestens teilweise in den Hohlraum (26, 26', 26") zurückgeführt wird.

7. Verfahren gemäss einem der vorhergehenden Ansprüche, **dadurch gekennzeichnet, dass** das Wandelement (28) und/oder das Schott (30), in dem mindestens ein Teil der Endüberhitzerrohre (24) angeordnet ist, im Strahlungsteil (9) des Kessels (3) angeordnet ist.

8. Verfahren gemäss einem der vorhergehenden Ansprüche, **dadurch gekennzeichnet, dass** dem Strahlungsteil (9) des Kessels (3) Eindüsungen (12) zugeordnet sind, welche in mindestens einer Eindüsebene (11) angeordnet sind, und das Wandelement (28), in dem mindestens ein Teil der Endüberhitzerrohre (24) angeordnet ist, im Strahlungsteil (9) oberhalb der obersten Eindüsebene (11) angeordnet ist.

9. Verfahren gemäss einem der vorhergehenden Ansprüche, **dadurch gekennzeichnet, dass** das Wandelement (28) und/oder das Schott (30), in dem mindestens ein Teil der Endüberhitzerrohre (24) angeordnet ist, in einem Teil des Kessels (3) angeordnet ist, in der die Rauchgastemperatur 600°C bis 1'200°C beträgt.

10. Verfahren gemäss einem der vorhergehenden Ansprüche, **dadurch gekennzeichnet, dass** nach der Endüberhitzung überhitzter Dampf mit einer Temperatur im Bereich von 350°C bis 650°C, bevorzugt von 400°C bis 600°C, bevorzugter von 450°C bis 550°C, und einem Druck im Bereich von 40 bis 150 bar vorliegt.

11. Verfahren gemäss einem der vorhergehenden Ansprüche, **dadurch gekennzeichnet, dass** im Wandelement (28) und/oder im Schott (30) zudem eine einen Verdampfer bildene Membranverdampferwand (36) eingelassen ist.

12. Verfahren gemäss einem der vorhergehenden Ansprüche, **dadurch gekennzeichnet, dass** der Hohlraum (26) zwischen einer auf die Membranverdampferwand (36) aufgebrachten Isolationsschicht (32) des Wandelements (28) und/oder Schotts (30) und der im Abstand von der Isolationsschicht (32) angeordneten Feuerfestmaterialschicht (34) ausgebildet ist.

13. Vorrichtung zur Erzeugung von überhitztem Dampf mittels der im Kessel (3) einer Verbrennungsanlage (2; 201) erzeugten Wärme umfassend
einen Endüberhitzer (22) zur Endüberhitzung von vorüberhitztem Dampf, wobei der Endüberhitzer in Form von mehreren Endüberhitzerrohren (24) vorliegt, welche mindestens teilweise in einem Hohlraum (26) angeordnet sind, der im Innern eines Wandelements (28) und/oder eines Schotts (30) ausgebildet ist und mindestens auf einer Seite mindestens teilweise durch eine Feuerfestmaterialschicht (34) abgeschlossen ist,
**dadurch gekennzeichnet, dass** die Vorrichtung zusätzlich einen Sekundärwärmetauscher (42) umfasst, welcher mit dem Hohlraum (26) über eine Sekundärmediumzuführleitung (44) strömungsverbunden ist.

14. Vorrichtung gemäss Anspruch 13, **dadurch gekennzeichnet, dass** der Sekundärwärmetauscher (42) derart ausgestaltet ist, Wärme vom Sekundärmedium auf den vorüberhitzten Dampf zu übertragen, vorzugsweise bevor dieser dem Endüberhitzer (22) zugeführt wird.

15. Verbrennungsanlage umfassend eine Vorrichtung (20) gemäss einem der Ansprüche 13 oder 14.

## Claims

1. Method for generating superheated steam by means of the heat which is generated in the boiler (3) of an incineration plant (2; 201), pre-superheated steam being fed to a final superheater (22) which is present in the form of a plurality of final superheater pipes (24), through which the pre-superheated steam is guided and is finally superheated in the process, and the final superheater pipes (24, 24', 24") being arranged at least partially in at least one cavity (26, 26', 26"), which is configured in the interior of a wall element (28) of the boiler (3) and/or of a bulkhead (30) which is arranged in the boiler (3) and is closed off on the boiler side at least partially by way of a refractory material layer (34) and is flowed over by the flue gas which is released during the combustion, wherein the cavity (26) is flowed through by a secondary medium which is heated in the process via heat transfer from the flue gas via the refractory layer (34), and the secondary medium which is heated in this way is fed via a secondary medium feed line (44) to a secondary heat exchanger (42).

2. Method as claimed in claim 1, wherein, in the secondary heat exchanger (42), heat is transferred from the secondary medium to the steam to be superheated, preferably before the latter is fed to the final superheater (22).

3. Method as claimed in claim 2, wherein the temperature of the steam to be superheated is increased by up to 50°C by way of the heat transfer in the secondary heat exchanger (42).

4. Method as claimed in one of the preceding claims, wherein the pre-superheated steam is generated by means of at least one superheater (161, 162, 163) which is arranged in the interior of the boiler (3) of the incineration plant, in particular of a convection pass (14) of the boiler.

5. Method as claimed in one of the preceding claims, wherein the secondary medium is substantially free of substances which are corrosive with respect to the final superheater pipes (24), and is preferably air.

6. Method as claimed in one of the preceding claims, wherein the secondary medium is returned at least partially into the cavity (26, 26', 26") after the transfer of the heat which is contained in the secondary medium has taken place in the secondary heat exchanger (42) .

7. Method as claimed in one of the preceding claims, wherein the wall element (28) and/or the bulkhead (30), in which at least one part of the final superheater pipes (24) is arranged, are/is arranged in the radiation part (9) of the boiler (3) .

8. Method as claimed in one of the preceding claims, wherein the radiation part (9) of the boiler (3) is assigned injection nozzles (12) which are arranged in at least one injection plane (11), and the wall element (28), in which at least one part of the final superheater pipes (24) is arranged, is arranged in the radiation part (9) above the uppermost injection plane (11).

9. Method as claimed in one of the preceding claims, wherein the wall element (28) and/or the bulkhead (30), in which at least one part of the final superheater pipes (24) is arranged, are/is arranged in a part of the boiler (3), in which the flue gas temperature is from 600°C to 1200°C.

10. Method as claimed in one of the preceding claims, wherein, after the final superheating, superheated steam is present at a temperature in the range from 350°C to 650°C, preferably from 400°C to 600°C, more preferably from 450°C to 550°C, and at a pressure in the range from 40 to 150 bar.

11. Method as claimed in one of the preceding claims, wherein a diaphragm evaporator wall (36) which forms an evaporator is additionally let into the wall element (28) and/or into the bulkhead (30).

12. Method as claimed in one of the preceding claims, wherein the cavity (26) is configured between an insulation layer (32) of the wall element (28) and/or of the bulkhead (30), which insulation layer (32) is applied to the diaphragm evaporator wall (36), and the refractory material layer (34) which is arranged at a spacing from the insulation layer (32).

13. Apparatus for generating superheated steam by means of the heat which is generated in the boiler (3) of an incineration plant (2; 201) comprising a final superheater (22) for finally superheating pre-superheated steam, the final superheater being present in the form of a plurality of final superheater pipes (24) which are arranged at least partially in a cavity (26) which is configured in the interior of a wall element (28) and/or a bulkhead (30) and is closed off at least on one side at least partially by way of a refractory material layer (34), wherein the apparatus additionally comprises a secondary heat exchanger (42) which is flow-connected to the cavity (26) via a secondary medium feed line (44).

14. Apparatus as claimed in claim 13, wherein the secondary heat exchanger (42) is configured so as to transfer heat from the secondary medium to the pre-superheated steam, preferably before the latter is fed to the final superheater (22).

15. Incineration plant comprising an apparatus (20) as claimed in either of claims 13 and 14.

## Revendications

1. Méthode pour produire de la vapeur surchauffée au moyen de chaleur qui est produite dans la chaudière (3) d'une usine d'incinération (2; 201), de la vapeur présurchauffée étant amenée à un surchauffeur final (22) qui est présent sous la forme d'une multitude de tuyaux de surchauffeur final (24) à travers lesquels la vapeur présurchauffée est conduite et ce faisant est finalement surchauffée, et les tuyaux de surchauffeur final (24, 24', 24") étant arrangés au moins partiellement dans au moins une cavité (26, 26', 26"), qui est façonnée à l'intérieur d'un élément de paroi (28) de la chaudière (3) et/ou d'une cloison étanche (30) arrangée dans la chaudière (3) et qui est du côté de la chaudière fermée au moins partiellement au moyen d'une couche de matériau réfractaire (34) et dans laquelle s'écoule le gaz de fumée libéré au cours de la combustion, **caractérisée en ce que** la cavité (26) est traversée par un médium secondaire, qui ce faisant est chauffé au moyen d'un transfert de chaleur du gaz de fumée au moyen de la couche de matériau réfractaire (34), et le médium secondaire chauffé de cette façon est amené au moyen d'une conduite d'amenée de médium secondaire (44) à un échangeur de chaleur secondaire (42).

2. Méthode selon la revendication 1, **caractérisée en ce que**, dans l'échangeur de chaleur secondaire (42), de la chaleur est transférée du médium secondaire à la vapeur à surchauffer, préférablement avant que cette dernière ne soit amenée au surchauffeur final (22).

3. Méthode selon la revendication 2, **caractérisée en ce que** la température de la vapeur à surchauffer est augmentée de jusqu'à 50°C au moyen du transfert de chaleur dans l'échangeur de chaleur secondaire (42).

4. Méthode selon l'une des revendications précédentes, **caractérisée en ce que** la vapeur présurchauffée est produite au moyen d'au moins d'un surchauffeur (161, 162, 163) qui est arrangé à l'intérieur de la chaudière (3) de l'usine d'incinération, en particulier dans une conduite de convection (14) de la chaudière.

5. Méthode selon l'une des revendications précédentes, **caractérisée en ce que** le médium secondaire est sensiblement libre de substances corrosives par rapport aux tuyaux de surchauffeur final (24), et est préférablement de l'air.

6. Méthode selon l'une des revendications précédentes, **caractérisée en ce que** le médium secondaire est retourné au moins partiellement dans la cavité (26, 26', 26") après que le transfert de chaleur contenue dans le médium secondaire ait eu lieu dans l'échangeur de chaleur secondaire (42).

7. Méthode selon l'une des revendications précédentes, **caractérisée en ce que** l'élément de paroi (28) et/ou la cloison étanche (30), dans lequel respectivement laquelle au moins une partie des tuyaux de surchauffeur final (24) est disposée, sont/est disposée dans la partie de rayonnement (9) de la chaudière (3).

8. Méthode selon l'une des revendications précédentes, **caractérisée en ce que** des injecteurs (12) disposés dans au moins un plan d'injection (11) sont associés à la partie de rayonnement (9) de la chaudière (3), et l'élément de paroi (28), dans lequel au moins une partie des tuyaux de surchauffeur final (24) est disposée, est disposée dans la partie de rayonnement (9) au-dessus du plan d'injection (11) le plus haut.

9. Méthode selon l'une des revendications précédentes, **caractérisée en ce que** l'élément de paroi (28) et/ou la cloison étanche (30), dans lequel respectivement laquelle au moins une partie des tuyaux de surchauffeur final (24) est disposée, sont/est disposée dans une partie de la chaudière (3), dans laquelle le gaz de fumée est à une température de 600°C à 1200°C.

10. Méthode selon l'une des revendications précédentes, **caractérisée en ce que**, après le surchauffage final, de la vapeur surchauffée est présente à une température dans un intervalle de 350°C à 650°C, préférablement de 400°C à 600°C, de façon plus préférée de 450°C à 550°C, et à une pression dans un intervalle de 40 à 150 bar.

11. Méthode selon l'une des revendications précédentes, **caractérisée en ce qu'**une paroi d'évaporateur à membrane (36) qui forme un évaporateur est en plus insérée dans l'élément de paroi (28) et/ou dans la cloison étanche (30).

12. Méthode selon l'une des revendications précédentes, **caractérisée en ce que** la cavité (26) est façonnée entre une couche d'isolation (32) de l'élément de paroi (28) et/ou de la cloison étanche (30), laquelle couche d'isolation (32) est appliquée sur la paroi d'évaporateur à membrane (36), et la couche de matériau réfractaire (34) disposée à distance de la couche d'isolation (32).

13. Dispositif pour produire de la vapeur surchauffée au moyen de chaleur qui est produite dans la chaudière (3) d'une usine d'incinération (2; 201) comprenant un surchauffeur final (22) pour surchauffer finalement de la vapeur présurchauffée, le surchauffeur final étant présent sous la forme d'une multitude de tuyaux de surchauffeur final (24) disposés au moins partiellement dans une cavité (26) façonnée à l'intérieur d'un élément de paroi (28) et/ou d'une cloison étanche (30) et au moins d'un côté fermée au moins partiellement au moyen d'une couche de matériau réfractaire (34), **caractérisée en ce que** le dispositif en plus comprend un échangeur de chaleur secondaire (42) qui est relié en communication de fluide à la cavité (26) au moyen d'une conduite d'amenée de médium secondaire (44).

14. Dispositif selon la revendication 13, **caractérisée en ce que** l'échangeur de chaleur secondaire (42) est façonné de façon à transmettre de la chaleur du médium secondaire à la vapeur présurchauffée, préférablement avant que cette dernière ne soit amenée au surchauffeur final (22).

15. Usine d'incinération comprenant un dispositif (20) selon l'une des revendications 13 ou 14.
